# FASCICULE DE BREVET EUROPEEN

(11) **EP 1 868 020 B1**
(45) Date de publication et mention de la délivrance du brevet: **22.06.2011**
(21) Numéro de dépôt: 06122531.4
(22) Date de dépôt: 18.10.2006
(51) Int. Cl.: G02B 6/50

(54) **Procédé et dispositif d'installation de cables et gaines dans une canalisation non visitable**
Verfahren und Apparat zur Installation von Kabeln und Hüllen in nicht-begehbaren Kanalisationen
Method and device for installation of cables and tubes in non visitable canalisations

(30) Priorité: 15.06.2006 FR 0605324
(43) Date de publication de la demande: 19.12.2007
(73) Titulaire: Sogetrel, 88150 Thaon les Vosges (FR)
(72) Inventeur: Wecker, Gérard, 57100, Thionville (FR)
(74) Mandataire: Domange, Maxime

(56) Documents cités:
- EP-A- 1 298 373
- EP-A1- 0 905 433
- EP-A2- 0 298 715
- EP-A2- 1 221 750
- DE-A1- 19 813 728
- DE-U1- 29 801 408
- JP-A- 5 272 664
- JP-A- 2000 104 325

## Description

La présente invention se rapporte au domaine général de l'installation de corps et éléments longilignes enroulables, tels que des câbles, gaines et leurs analogues, dans des canalisations, en particulier des canalisations sans pression, par exemple des canalisations d'égouts.

Plus particulièrement, l'invention concerne un procédé d'installation de tels corps à l'intérieur de dites canalisations à l'aide d'éléments de soutien ponctuels, et un dispositif robotisé de mise en oeuvre de ce procédé.

Le domaine de l'installation de câbles de télécommunication est un secteur en plein essor, du fait notamment de l'importance croissante prise par les technologies de télécommunications et d'information et le développement nécessaire des réseaux permettant le développement et l'emploi de celles-ci.

En effet, l'installation de réseaux de télécommunications génère un usage extensif de câbles et notamment, de plus en plus, de câbles à fibres optiques.

Il est souhaitable que le déploiement des infrastructures nécessaires à la mise en service des réseaux suive la demande du point de vue des transferts de données, en particulier depuis l'avènement des solutions à très haut débit.

Aussi, la rapidité, la simplicité, la qualité et le coût des déploiements de câbles sont devenus des points critiques pour les entreprises spécialisées dans l'installation d'infrastructures réseaux.

L'invention concerne en particulier le déploiement de câbles dans des canalisations existantes, de préférence circulaires, trop étroites pour être visitées et destinées à une autre application que le câblage. On considère en général que les canalisations de diamètre supérieures à 800 mm sont visitables.

L'invention répond à la demande des opérateurs de télécommunication qui souhaitent accéder avec des câbles optiques jusqu'à chaque bâtiment au moindre coût. Le procédé a pour vocation de remplacer l'enfouissement traditionnel des câbles, opération coûteuse et nuisante pour les usagers et riverains du domaine public.

Diverses familles de solutions existent dans ce cadre spécifique mais aucune ne donnent pleine satisfaction, que ce soit au niveau de la robustesse, du coût, de la simplicité de mise en oeuvre ou encore de la rapidité.

Par exemple, il peut être nécessaire d'interrompre un écoulement dans une canalisation afin d'installer un câble ou encore de faire des travaux de génie civil.

Une de ces solutions particulièrement intéressante consiste à fixer le câble entre des points accessibles du réseau dans lesquels peuvent être installés des moyens de fixation. On connaît des techniques selon lesquelles le câble est fixé tendu entre deux regards de visite à l'aide de moyens de tensionnement par exemple un tendeur lanterne couplée à un tire-câble, le tout accroché à une plaque portant crochet fixée par vissage, chevillage ou scellage sur la paroi du regard de visite.

Cette technique est particulièrement intéressante car elle nécessite une intervention assez légère sur les canalisations sans travaux de génie civil et sans nécessité d'interruption des écoulements. Le câble est simplement introduit dans la canalisation.

Le tensionnement du câble permet de plaquer autant que possible le câble sous la paroi supérieure de la canalisation. Aucun obstacle ne vient, par conséquent, perturber l'écoulement. Cependant comme la tension exercée sur le câble ne doit pas dépasser une valeur donnée par le constructeur, on observe une flèche dont l'importance peut générer des désordres dans l'exploitation de la canalisation tels que le piégeage de corps flottants et la constitution de bouchons par agglomération locale des matières transportées par les eaux. Cette technique ne résout donc que partiellement le problème de l'installation d'un câble dans une canalisation.

On connaît enfin des documents DE 19813728,JP-A-05272664 et EP-A-0905433 une technique proposant l'utilisation d'éléments de soutien ponctuels en forme d'arceaux destinés à être installés dans une canalisation afin de soutenir un câble fixé entre deux points à l'intérieur de la canalisation. Les branches de ces arceaux présentent une certaine élasticité permettant l'introduction desdits arceaux dans la canalisation lorsqu'ils sont contraints et le placage du câble contre la paroi interne de la canalisation lorsque ladite contrainte est libérée. Les éléments de soutien sont mis en place directement dans la conduite par un dispositif mécanique comportant un chargeur recevant lesdits éléments de soutien dans un état contraint et qui sont ensuite libérés un à un dans la conduite au fur et à mesure de l'avancement du dispositif mécanique dans la canalisation.

Cette dernière technique ne nécessite aucun perçage ni aucune intervention sur la canalisation elle-même.

Toutefois, lorsqu'il convient d'équiper des conduites de longueurs importantes, cette technique présente certaines limites. En effet, les chargeurs des dispositifs d'installation des clips de soutien dans les canalisations ont une capacité limitée. Il est par conséquent nécessaire d'effectuer des allers et retours successifs des dispositifs pour remplir les chargeurs lorsque ces derniers sont vides, ce qui augmente de façon importante la durée des opérations d'installation des câbles et donc le coût global d'installation, qui constitue un paramètre crucial dans le gain des marchés de raccordement et de câblage de télécommunications.

La présente invention à pour objectif de fournir un procédé d'installation d'un corps longiligne souple apte à être bobiné tel qu'un câble, une gaine ou analogues à l'intérieur d'une canalisation, notamment une canalisation non visitable à l'aide d'élément de soutien ponctuels qui permette de réduire les durées et donc les coûts d'installations comparativement à la technique connue mettant en oeuvre des dispositifs à chargeurs.

Cet objectif est atteint selon la présente invention grâce à un procédé d'installation d'un dit corps longiligne souple dans lequel on maintient ledit corps longiligne contre une paroi de ladite canalisation à l'aide d'éléments de soutien ponctuels comportant des branches élastiques permettant l'introduction desdits éléments de soutien dans la canalisation lorsque lesdites branches sont contraintes et le placage desdites branches et dudit corps longiligne contre la paroi interne de la canalisation lorsque lesdites branches sont libérées. Conformément à l'invention ce procédé est caractérisé par le fait que successivement :
a) on fixe avant insertion dudit corps longiligne dans ladite canalisation une pluralité de dits éléments de soutien ponctuels le long dudit corps longiligne à installer dans ladite canalisation ;
b) on contraint en flexion lesdites branches desdits éléments de soutien ponctuels fixés sur ledit corps longiligne et on maintient lesdites branches sous contrainte par l'intermédiaire d'un élément de blocage ;
c) on introduit ledit corps longiligne supportant lesdits éléments de soutien ponctuels dont les branches sont contraintes dans ladite canalisation entre au moins deux regards d'accès à ladite canalisation ;
d) on plaque ledit corps longiligne contre la paroi de ladite canalisation par retrait ou rupture dudit élément de blocage contraignant lesdites branches de chaque dit élément de soutien ponctuel, lesdites branches, une fois libérées, réalisant un mouvement d'extension ou d'écartement latéral provoquant le plaquage dudit élément de soutien et dudit corps longiligne contre la paroi de la canalisation.

Ainsi grâce au procédé de l'invention, on équipe les câbles ou des gaines à installer avant même insertion dans la canalisation à équiper à l'aide d'éléments de soutien ponctuels sur la longueur nécessaire et l'on contraint les branches élastiques desdits éléments de soutien de manière à permettre l'insertion des câbles munis desdits éléments de soutien dans la canalisation puis, une fois ceci réalisé, de libérer successivement les branches de chacun desdits éléments de soutien par tout moyen approprié pour plaquer les câbles contre la parois de la canalisation, ce qui peut se faire très simplement et rapidement à l'aide par exemple d'un robot télécommandé se déplaçant à l'intérieur de la conduite en cours d'équipement.

La position retenue pour installer les câbles ou gaines est la position zénithale, c'est l'endroit de la conduite qui est le moins sollicité par les effluents qui atteignent le sommet de la conduite.

Selon une première caractéristique préférée de l'invention, ledit corps longiligne que l'on souhaite installer est tiré au cours de l'étape c) depuis un premier regard d'accès situé en aval de ladite canalisation par l'intermédiaire d'un câble de traction fixé à une extrémité dudit corps longiligne par l'intermédiaire d'une pince d'ancrage, et est simultanément poussée à l'amont. Au niveau desdits regards d'accès en amont et en aval, les extrémités du corps longiligne sont ancrées sur la paroi desdits regards au moyen de dispositifs d'ancrage apte à exercer un effort tenseur sur ledit corps longiligne.

Une fois l'ancrage du corps longiligne effectué, un effort de traction est alors exercé sur celui-ci pour le mettre en tension. Cette mise sous tension permet de prédisposer ledit corps longiligne en partie haute de la canalisation dans laquelle est réalisée l'installation.

Dans un mode préférentiel de mise en oeuvre du procédé de l'invention, à l'étape a), on fixe chaque dit élément de soutien ponctuel, de telle sorte que celui-ci possède un degré de liberté en rotation autour dudit corps longiligne mais soit bloqué en translation longitudinale sur ledit corps.

On obtient ainsi une excellente répartition longitudinale des clips de soutien ponctuels sur lesdits corps longilignes (par exemples les câbles) à l'intérieur de la canalisation ainsi qu'un meilleur positionnement de ceux-ci avant placage contre les parois de ladite canalisation.

Les éléments de soutien sont installés sur ledit corps longiligne avant son introduction dans la conduite et sont articulés dans le sens perpendiculaire à l'axe de la conduite pour leur permettre de s'effacer dans un plan horizontal pendant l'introduction dudit corps longiligne dans la conduite. Lesdits éléments de soutien possèdent un degré de liberté angulaire autour du corps longiligne pour lui permettre de se positionner de manière optimale lors du placage contre la paroi de la conduite.

Dans un mode préféré de mise en oeuvre du procédé de l'invention, lesdits éléments de soutien ponctuel sont réalisés à partir de fil métallique et sont fixés sur ledit corps longiligne par l'intermédiaire de noix de fixation mobile en rotation autour dudit corps longiligne et fixe en translation longitudinalement sur ledit corps longiligne.

Avantageusement dans ce mode préféré de réalisation de l'invention chaque dit élément de soutien ponctuel est solidaire d'une dite noix de fixation et apte à pivoter sur ladite noix de manière à pouvoir être positionné dans ladite canalisation de telle sorte que lesdites branches dudit éléments de soutien s'étendent exactement dans un plan orthogonal à l'axe de ladite canalisation avant retrait ou rupture dudit élément de blocage des branches.

Une forme particulièrement avantageuse d'éléments de soutien ponctuel est telle que ceux-ci comprennent :
- une partie centrale rectiligne par laquelle chaque dit élément de soutien est solidaire d'une dite noix de fixation et permet le pivotement sur ladite noix autour d'un axe sensiblement horizontal;
- deux parties verticales rectilignes et symétriques de part et d'autre de ladite partie centrale qui ramènent ledit élément de soutien au contact de la voûte de la canalisation et permettent un blocage de celui-ci sur la noix;
- deux branches circulaires symétriques s'étendant depuis l'extrémité supérieure desdites parties verticales; et
- deux encoches aux extrémités desdites branches qui permettent de fixer un dit élément de blocage des branches pour les phases d'introduction dans la canalisation.

De tels éléments de soutien ponctuel disposent ainsi de suffisamment d'élasticité pour introduire le clip dans la conduite sans le déformer et de force de rappel pour assurer le placage et le maintien d'un corps longiligne tel qu'un câble ou une gaine par appui sur la voûte interne d'une canalisation.

Pour un maintien optimal des éléments de soutien en position verticale de placage dans la canalisation, lesdites noix de fixation comportent des butées de blocage en rotation desdits éléments de soutien, ces dites butées étant conformées et positionnées sur les noix de manière à coopérer avec lesdites parties verticales symétriques desdits éléments de soutien.

Grâce à ces butées, le pivotement des éléments de soutien sur lesdites noix est limité entre deux positions extrêmes que doivent pouvoir prendre les éléments de soutien, à savoir une position d'introduction dans la canalisation et une position finale de maintien d'un corps longiligne contre la voûte interne d'une canalisation.

Conformément à une autre caractéristique avantageuse de l'invention, entre les étapes c) et d), on réalise d'ailleurs un positionnement mécanique desdits éléments de soutien ponctuels à l'intérieur de la canalisation, par l'intermédiaire d'un dispositif robotisé, apte à être introduit dans ladite canalisation, ledit dispositif robotisé permettant le retrait ou la rupture des dits éléments de blocage des branches desdits éléments de soutien ponctuels à l'étape d).

Il est ainsi possible d'orienter convenablement les clips de soutien, et donc le ou les câbles installés dans la canalisation avant placage contre les parois de la canalisation.

D'ailleurs, ledit positionnement mécanique des éléments de soutien ponctuels à l'intérieur de la canalisation est tel que ledit corps longiligne soit plaqué contre la paroi supérieure de la canalisation après retrait desdits éléments de blocage et plaquage desdits éléments de soutien contre les parois de la canalisation.

Toutefois, le dispositif robotisé par l'intermédiaire duquel sont positionnés les câbles dans la conduite est de préférence également apte à orienter angulairement lesdits câbles à l'intérieur des conduites de façon à éviter d'éventuels obstacles ou points de raccordement dans lesdites conduites.

De façon avantageuse, à l'étape d), on rompt ledit élément de blocage par découpage ou encore par fusion, cette rupture étant avantageusement réalisée par l'intermédiaire du dispositif robotisé, ce dernier comportant des moyens de rupture desdits éléments de blocage appropriés.

Enfin, selon le procédé de l'invention il est également avantageux de positionner et de soutenir ledit corps longiligne contre la paroi supérieure de ladite canalisation à l'aide dudit dispositif robotisé pendant le déroulement de l'étape d).

Un second aspect de la présente invention réside également dans la conception et la fourniture d'un dispositif adapté à la mise en oeuvre du procédé d'installation décrit précédemment. Un tel dispositif comporte notamment un chariot motorisé, équipé de moyens de roulement et de glissement contre une paroi d'une canalisation à l'intérieur de laquelle un dit corps longiligne souple apte à être bobiné doit être installé et une plate-forme support solidaire dudit chariot motorisé. Conformément à la présente invention ce dispositif est caractérisé en ce qu'il comporte des moyens de rupture desdits moyens de blocage des branches desdits éléments de soutien ponctuels fixés sur ledit corps longiligne à installer dans ladite canalisation.

Selon des variantes possibles de réalisation du dispositif de l'invention lesdits moyens de rupture sont solidaires de ladite plate-forme et/ou dudit chariot et sont proéminents par rapport audit chariot et ladite plate-forme. Lesdits moyens de rupture peuvent également être fixes ou mobiles par rapport audit chariot ou à ladite plate-forme et comporter selon les cas au moins un organe tranchant et/ou au moins un organe chauffant.

De façon avantageuse, lesdits moyens de rupture peuvent également être radio- ou télécommandés, tout comme le dispositif dans son ensemble.

Selon un mode de réalisation préféré, le dispositif de l'invention comporte en outre des moyens de positionnement et de soutien d'un dit corps longiligne à être installé dans une dite canalisation, lesdits moyens de positionnement étant solidaires de la plate-forme.

Ces dits moyens de positionnement et de soutien comportent avantageusement un galet presseur de forme adaptée au soutien et au glissement le long dudit corps longiligne (par exemple le long d'un câble), ledit galet presseur étant positionné à l'extrémité supérieure d'un mécanisme élévateur solidaire de ladite plate-forme, lequel comporte un vérin d'actionnement, de préférence un vérin électrique.

Différentes variantes de réalisation peuvent être envisagées pour le mécanisme élévateur du dispositif de l'invention. Dans une première variante, ledit mécanisme élévateur comporte un bras monté pivotant sur la plate forme, ledit bras étant, le cas échéant, télescopique et actionné par ledit vérin.

Dans une seconde variante, préférée, ledit mécanisme élévateur comporte un pantographe, actionné par un vérin ou un moteur.

Le dispositif de l'invention comporte également avantageusement au moins une caméra permettant une visualisation de l'intérieur de ladite conduite lors des déplacements dudit dispositif dans ladite conduite. Cette ladite caméra peut de façon avantageuse être fixée sur ladite plate-forme, sur ledit chariot ou à l'extrémité supérieure dudit mécanisme élévateur.

Enfin, dans un mode de réalisation préféré, le dispositif de l'invention comporte des spatules d'orientation de dits éléments de soutien ponctuels fixés, conformément au procédé de l'invention, sur un dit corps longiligne à installer dans une canalisation. Lesdites spatules sont fixées sur ledit chariot ou ladite plate-forme de telle sorte qu'elles entrent en contact et appuient contre les branches desdits éléments de liaison ponctuels contraints par un dit élément de blocage lorsque ledit dispositif avance dans ladite canalisation.

Il est ainsi possible de positionner lesdits éléments de blocage des branches en regard desdits moyens de rupture du dispositif et ledit corps longiligne en regard de la paroi supérieure de ladite canalisation, de telle sorte que ledit moyen de blocage est rompu, ledit corps longiligne est plaqué contre cette dite paroi supérieure.

D'autres caractéristiques et avantages de la présente invention ressortiront de la description faite ci-dessous, en référence aux dessins annexés qui en illustrent un exemple de réalisation dépourvu de tout caractère limitatif. Sur les figures :
- la figure 1 représente un élément de soutien ponctuel utile pour la mise en oeuvre du procédé de l'invention dans un premier mode de réalisation.
- la figure 2 représente une étape d'insertion d'un câble équipé de plusieurs éléments de soutien tels que représentés à la figure 1 dans une canalisation avant de fixer ledit câble dans ladite canalisation selon le procédé de l'invention;
- Les figures 3A et 3B représentent respectivement en vues de profil et en vue de face un dispositif robotisé à l'intérieur d'une canalisation pour la mise en oeuvre du procédé de pose de câbles selon l'invention à l'aide d'éléments soutien ponctuels conformes à la figure 1 dans un premier mode de réalisation;
- Les figures 4A à 4C représentent schématiquement un élément de soutien ponctuel pour la mise en oeuvre du procédé de l'invention dans un second mode de réalisation, respectivement à l'état libre, à l'état contraint et à l'état libre après installation dans une canalisation;
- les figures 5A et 5B représentent le mode de fixation d'un élément de soutien ponctuels tel que représenté aux figures 4A à 4C sur un câble à l'aide d'une noix de fixation dans les deux positions extrêmes dudit élément de soutien par rapport à ladite noix;
- les figures 6A à 6C représentent les différentes étapes de mise en oeuvre du procédé de l'invention dans un second mode de réalisation préféré;
- Les figures 7A à 7C représentent respectivement en vues de profil, de dessus et de face un dispositif robotisé à l'intérieur d'une canalisation pour la mise en oeuvre du procédé de pose de câbles selon l'invention dans le mode de réalisation des figures 6A à 6D.

La présente invention propose un nouveau procédé et un dispositif 5 pour poser des câbles 1 (ou des gaines destinées à recevoir des câbles) de télécommunications dans les parties non visitables des égouts 2.

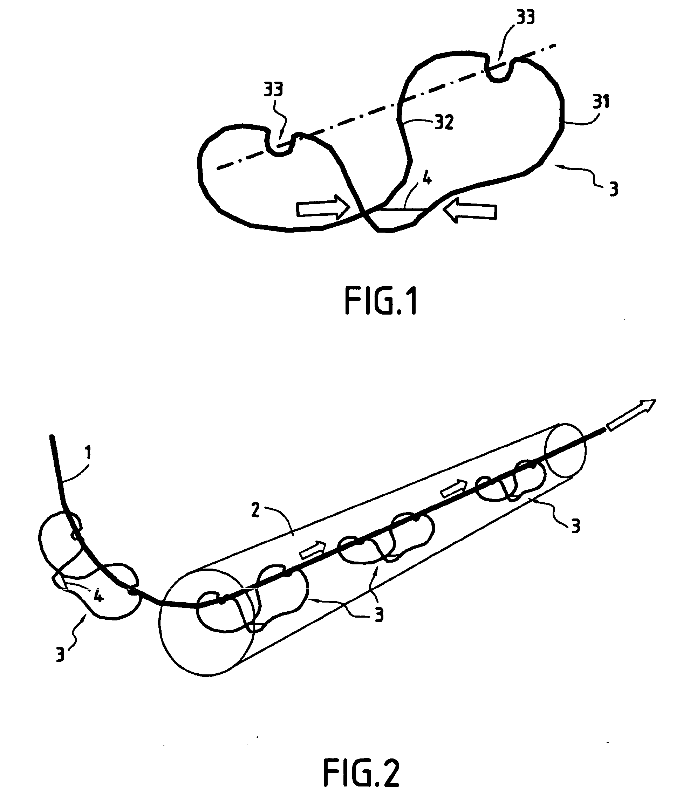

Dans un premier mode de réalisation, décrit ci-après en référence aux figures 1 à 3B, le procédé de l'invention prévoit l'utilisation d'éléments de soutien ponctuels 3 tels que représentés à la figure 1, également appelés dans la suite de la description "clips" de soutien 3, afin de réaliser l'installation de câbles 1, gaines et analogues dans des canalisations non visitables 2.

Ces éléments de soutien 3 sont constitués d'un anneau en fil d'acier ou d'alliage inoxydable. Il est en effet nécessaire que le matériau constituant lesdits clips ait une bonne résistance à la corrosion puisqu'il est destiné à une utilisation dans des égouts 2, milieux généralement humides et souvent agressifs.

Une gamme de tailles de clips peut être fabriquée de manière à ce que chaque taille puisse être mise en oeuvre pour une fourchette donnée de tailles de canalisations.

Les clips de soutien 3 doivent posséder une bonne élasticité et une bonne flexibilité afin de permettre la mise en oeuvre du procédé de l'invention comme cela sera décrit ci-après. Pour ce faire, le clip de soutien 3 présente une double courbure qui lui confère une forme de berceau dont les bords sont formés par deux branches latérales 31, 32 jointes l'une à l'autre en leurs extrémités où elles forment deux encoches 33 permettant la fixation du clip 3 sur un câble (ou une gaine) 1 avant son installation dans une canalisation 2 à équiper comme représenté à la figure 2.

Sous cette forme, le clip 3 de soutien peut être aisément déformé et contraint en flexion latéralement et/ou longitudinalement. Conformément à l'invention, la déformation du clip de soutien 3 est obtenue par un lien 4 rapprochant les branches 31,32 comme représenté à la figure 1. Cette compression en deçà de la limite élastique du matériau, engendre une réduction du diamètre transversal du clip permettant son introduction et son positionnement dans une conduite 2.

La forme du clip de soutien 3 est étudiée pour obtenir après insertion dans une conduite 2 et rupture du lien 4 contraignant les branches 31, 32 du clip, un contact maximal avec la paroi intérieure de la conduite 2. L'effort de soutien exercé sur le câble (ou de la gaine) est alors obtenu par la force de réaction clip 3 contre les parois de la conduite.

Conformément à la présente invention, l'installation de câbles 1 (ou, gaines) dans des conduites 2 non visitables à l'aide de clips de soutien 3 tels que précédemment décrits s'effectue comme suit.

Dans un premier temps, les clips de soutien 3 sont fixés au câble (ou à la gaine) 1 à installer avant l'introduction dans la conduite par leurs encoches 33, l'ensemble constituant une sorte de guirlande, les branches 31, 32 des clips étant contraintes et déformées par un lien 4, par exemple constitué d'un fil textile, de matière synthétique tel que du NYLON® ou préférentiellement de matière biodégradable de manière à ne pas laisser de résidus dans la conduite.

L'ensemble est ensuite introduit dans la conduite 2 par tirage (figure 2), par exemple à l'aide d'un ombilic (non représenté sur les figures), depuis une extrémité de la conduite 2. Au cours de cette introduction, la forme en berceau des clips 3, favorise la translation du câble 1 dans la conduite 2.

Préalablement à l'introduction du câble 1, la conduite 2 est de préférence inspectée pour vérifier l'absence d'anomalies qui pourraient par exemple endommager le câble une fois installé ou former obstacle à l'installation et la translation du câble 1 ou de la gaine lors de son introduction.

Lors de cette inspection, les positions de repiquages et la génératrice de la conduite la plus avantageuse pour le positionnement de câble sont aussi avantageusement repérées. Si cela apparaît nécessaire, la conduite 2 peut également être nettoyée par hydro-curage avant le début de la procédure de pose du câble 1.

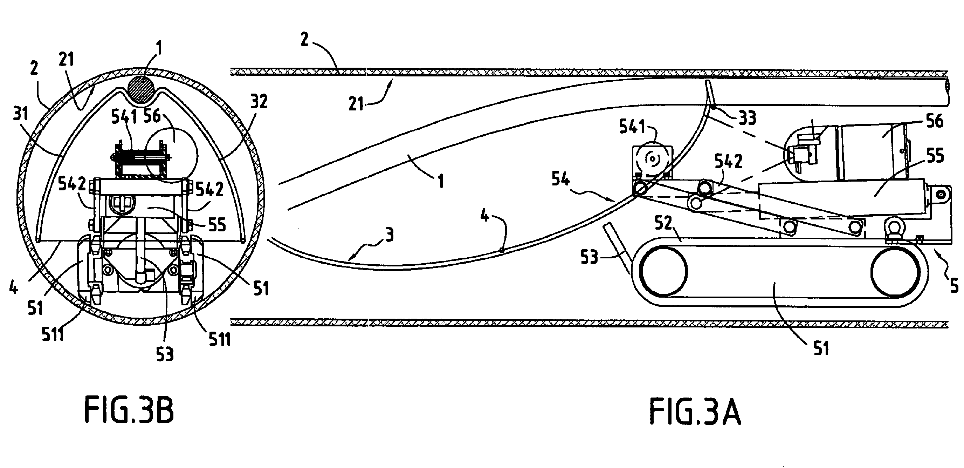

Après introduction du câble (ou de la gaine) 1, pré-équipé des clips de soutien 3 dans la conduite 2, ledit câble (ou la gaine) est mis sous tension et plaqué au plafond 21 de la conduite par rupture du lien de bridage 4 de chacun des clips de soutien 3 par l'intermédiaire d'un dispositif robotisé 5 tel que représenté aux figures 3A et 3B. Les branches 31, 32 des clips de soutien viennent, une fois le lien 4 rompu se plaquer contre les parois de la conduite sur lesquelles, les clips 3 exerçant alors sur le câble (ou la gaine) 1 une force de réaction verticale qui a pour effet de le plaquer contre la paroi supérieure 21 de la conduite 2.

Ainsi, le radier de la conduite 2 est dégagé ce qui n'entrave pas la circulation de matières dans la conduite 2. Dans le cas où la conduite 2 est une conduite d'égouts, l'entraînement des sédiments par les effluents s'effectue sans perte de charge même après installation du câble 1 dans ladite conduite.

Comme indiqué précédemment, la rupture des liens 4 des clips 3 à l'intérieur des la conduite 2 est réalisée à l'aide d'un dispositif robotisé 5 représenté aux figures 3A et 3B et décrit ci-après plus en détail.

Ce dispositif 5 comporte un chariot 51 muni d'éléments de roulement 511, 512 tels que des roues ou des chenilles permettant le déplacement du dispositif 5 dans la conduite 2. Un tel déplacement peut résulter d'un entraînement motorisé du chariot 51 ou bien d'une traction à l'aide d'un ombilic.

De préférence, un déplacement motorisé du dispositif 5 sera privilégié pour permettre une meilleure autonomie et flexibilité d'utilisation du dispositif 5 à l'intérieur des conduites 2.

A cet effet, le chariot 51 du dispositif 5 intègre avantageusement un moteur électrique alimenté par une source d'énergie extérieure à la conduite 2 à partir d'un ombilic suiveur également introduit dans ladite conduite 2, ledit moteur étant accouplé mécaniquement à un train d'entraînement desdits éléments de roulement 511, 512.

De plus, de façon avantageuse, le dispositif 5 inclue également une unité électronique de pilotage apte à commander ledit moteur électrique et comportant des moyens de commande à distance, par exemple des moyens de radiocommande ou télécommande par l'intermédiaire desquels des opérateurs peuvent à la surface guider et contrôler les mouvements du dispositif 5 et les opérations de mise en place des clips de soutien 3 et du câble 1 dans les conduites 2.

Pour faciliter la commande et le contrôle desdites opérations d'installation par lesdits opérateurs en surface, le dispositif 5 comporte également des moyens 56 d'éclairage et de visualisation par caméra, disposés de façon avantageuse sur une plateforme 52 à la surface supérieure du chariot 51 de façon appropriée pour éclairer et visionner le champ amont du dispositif 5 lors de ces déplacements dans la conduite 2.

Sur la plateforme 52 sont également installés des moyens 54 de positionnement de câbles 1 à l'intérieur de la conduite 2.

Les moyens de positionnement de câbles 1 comportent un pantographe 542 mu par un vérin 55 hydraulique ou, de préférence, électrique. Le pantographe 542 comporte un plateau supérieur sur lequel est fixé un galet presseur 541 formé d'un cylindre ou d'une poulie libre en rotation sur son axe de fixation, ce dernier étant solidaire à ses extrémités d'un bâti fixé sur le plateau du pantographe 542.

A l'avant du chariot 51, le dispositif 5 comporte un moyen de rupture 53 des liens 4 avec lesquels les branches 31, 32 des clips de soutien 3 du câble 1 sont contraintes. Ce moyen de rupture 53 est fixé sur le chariot 51 de telle sorte qu'il est proéminent à l'avant du dispositif 5 de manière à pouvoir entrer en contact facilement avec les liens 4 des clips 3 pour les rompre et libérer les branches 31, 32 des clips lors de l'avancement du dispositif 5 dans la conduite 2.

La nature du moyen de rupture 53 est de préférence choisie en fonction de celle des liens 4.

Selon l'invention, un moyen de rupture privilégié est constitué par une résistance chauffante 53 qui permet de couper simplement et rapidement tout type de lien 4 fusible, qu'il soit de nature textile, synthétique ou métallique.

Dans cette configuration, la résistance 53 peut avantageusement être alimentée, comme le moteur électrique du dispositif 5, par une source extérieure à partir d'un ombilic suiveur ou, en variante, par un générateur indépendant ou des batteries disposés sur la plateforme 52 ou à l'intérieur du chariot 51.

Le fonctionnement du dispositif 5 au cours des opérations d'installation de câbles 1 en canalisations non visitables conformément au procédé de l'invention vont maintenant être décrits plus en détails.

Après fixation des clips de soutien 3 sur le câble 1 à installer dans une canalisation 2 puis insertion dudit câble 1 dans ladite canalisation 2 (figure 2), avec les clips de soutien déformés par leur liens 4, jusqu'à l'emplacement de pose du câble 1.

Un dispositif 5 selon l'invention est ensuite introduit dans la canalisation 2 pour venir rompre les liens 4 retenant les branches 31, 32 des clips de soutien 3 et ainsi permettre le placage du câble 1 contre la paroi de la conduite 2 par expansion des branches des clips. Une fois introduit dans la conduite 2, le dispositif est avancé et positionné dans celle-ci par l'intermédiaire de la caméra de sorte que le câble soit calé sur le galet presseur 541 des moyens de positionnement 54 du dispositif. Le pantographe 542 est ensuite relevé par l'intermédiaire du vérin 55 de manière à soulever le câble 1 et le plaquer contre la paroi supérieur 21 de la conduite 2.

Le galet presseur 541 étant libre en rotation sur son axe, le dispositif 5 peut avancer ainsi librement dans la conduite en suivant le câble 1 tout en maintenant celui-ci contre la paroi supérieure de la canalisation 2. Ce maintien en suspension du câble 1 par le pantographe 542 et le galet presseur 541 du dispositif 5 provoque un soulèvement du câble devant le dispositif 5 dans le sens d'avancement de ce dernier dans la canalisation 2.

Ce soulèvement participe avantageusement du positionnement des liens 4 de blocage des branches des clips 3 fixés au câbles en regard du moyen de rupture 53 des liens du dispositif au fur et à mesure de l'avancée de ce dernier dans la canalisation 2 comme cela est représenté à la figure 3A.

Ainsi, c'est en avançant dans la canalisation 2 que le dispositif robotisé 5 rompt, par coupure ou fusion à l'aide du moyen de rupture 53, les liens 4 de blocage des clips de soutien ponctuel 3, ces derniers se développant alors instantanément par la force de réaction élastique de leurs branches 31, 32 qui viennent après rupture du lien se plaquer contre les parois de la canalisation 2, se faisant plaquant le câble 1 contre la paroi supérieure 21 de la conduite.

En poursuivant son avancée dans la conduite 2, le dispositif 5 libère ainsi de suite chacun des clips 3 fixés sur le câble 1, ce qui permet de bloquer et positionner ce dernier contre la paroi 21 de la canalisation 2 sur toute la longueur de celle-ci de façon similaire à un agrafage du câble 1, sans réduire le radier de ladite canalisation et donc sans risque de blocage et obturation après remise en service.

Lorsque l'ensemble des clips 3 fixés sur le câble 1 ont été libérés par l'intermédiaire du dispositif 5, puis que l'on aura le cas échéant réalisé une vérification de la bonne mise en place du câble dans toute la canalisation grâce à la caméra 56, on extrait le dispositif 5 de ladite canalisation par des moyens appropriés tels que sangles, treuils ou autres.

Le dispositif robotisé 5 de l'invention permet donc de réaliser la pose de câbles (ou gaines) en canalisations non visitables selon un procédé simple, automatisé et non destructeur, donc avec un coût humain et matériel et dans une durée considérablement réduits par rapport aux procédés connus de l'état de la technique.

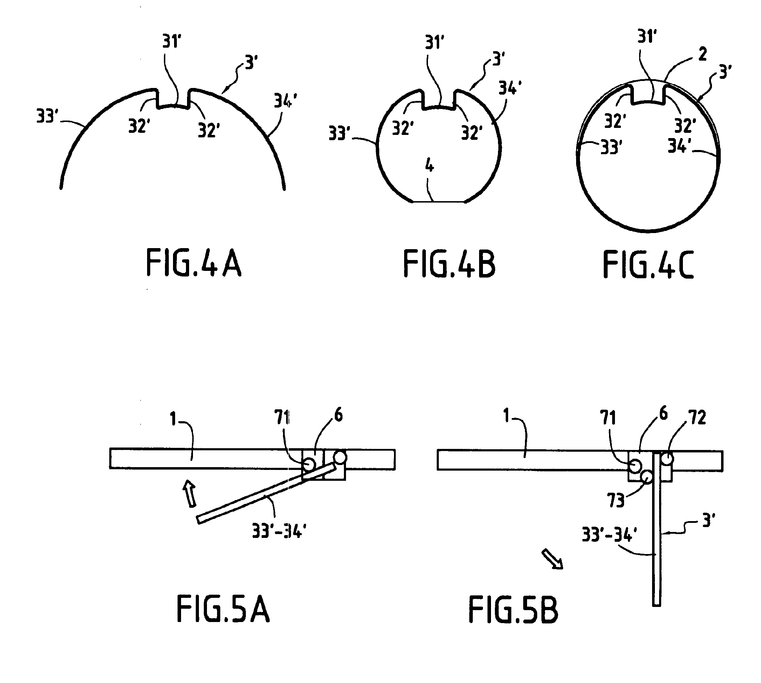

Une variante de réalisation du procédé d'installation de câbles selon l'invention et du dispositif robotisé pour sa mise en oeuvre est présentée ci-après en référence aux figures 4A à 7C.

Cette variante prévoit non pas une modification des étapes principales du procédé d'installation décrit précédemment relativement aux figures 1 à 3B, mais l'utilisation de clips de soutien ponctuels 3' d'un genre différent des clips annulaires 3 en forme de berceau utilisés dans la première variante de réalisation du procédé de l'invention.

Comme cela ressort des figures 4A à 4C, les clips de soutien 3' sont constitués d'un fil métallique sensiblement semi-circulaire. Ce clip 3' Les clips sont réalisés en fils métalliques afin de disposer de suffisamment d'élasticité pour introduire le clip dans une conduite sans le déformer et de force pour assurer le maintien d'un câble ou d'une gaine par appui sur la surface interne de la conduite.

Ces clips 3' comprennent avantageusement dans le mode de réalisation décrit:
- une partie centrale horizontale 31';
- deux parties verticales 32' rectilignes et symétriques de part et d'autre de la partie centrale;
- deux branches 33', 34' circulaires symétriques qui s'étendent depuis l'extrémité supérieure des deux parties verticales 32';
- deux encoches (non représentées) aux extrémités des branches qui permettent de fixer un lien 4 lors des phases d'introduction dans la conduite.

Comme représenté aux figures 5A à 7C, ces clips 3' sont fixés sur un câble ou une gaine 1 à installer dans une canalisation 2 par l'intermédiaire d'une noix de fixation 6. Les noix 6 peuvent être constituées de pièces de métal assemblable ou soudable ou de deux demi-coques de matière plastique injectée assemblable directement sur le câble 1 par encliquetage, soudage ou vissage.

Les clips 3' sont eux mêmes fixés sur ces noix 6 par pincement, bridage ou encliquetage par exemple par leur dite partie centrale 31', qui permet de pivoter les clips dans les noix.

Ces noix comportent également, comme représenté schématiquement sur les figures 5A et 5B, des butées 71, 72 de blocage des mouvements de rotation des clips 3'. Ces butées 71, 72 coopèrent avec lesdites parties 32' des clips 3'.

Les clips 3' peuvent ainsi prendre deux positions extrêmes dans la conduite 2, correspondant à deux états distincts :
- une première position (figure 5A) lors de l'introduction dans la conduite 2, dans laquelle les clips sont contraints, leurs branches 33', 34' étant liées par un fil 4 et dans une position proche de l'horizontale, chaque clip 3' étant pivoté autour de sa partie centrale 31' sur sa noix 6 de fixation et les parties 32' étant alors en butée contre des ergots 71 s'étendant sur les parois latérales de chaque noix 6; et
- une seconde position (figure 5B) après rupture du lien 4 et libération des branches 33', 34' pour maintenir les clips 3' contre la paroi de la conduite 2 en soutien du câble 1, dans laquelle lesdites branches sont dans un plan vertical orthogonal à l'axe de la conduite et bloquées dans cette position par des ergots ou logements, 72 de verrouillage sur les parois latérales des noix 6.

De façon avantageuse, la matière, le diamètre du fil et sa forme en position libre sont calculés de façon à ce que les clips 3' plaquent complètement à la conduite 2 en position de soutien finale (figures 4C et 5B) et restent dans ses limites d'élasticité en position contrainte (figures 4B, 5A, 7B et 7C.

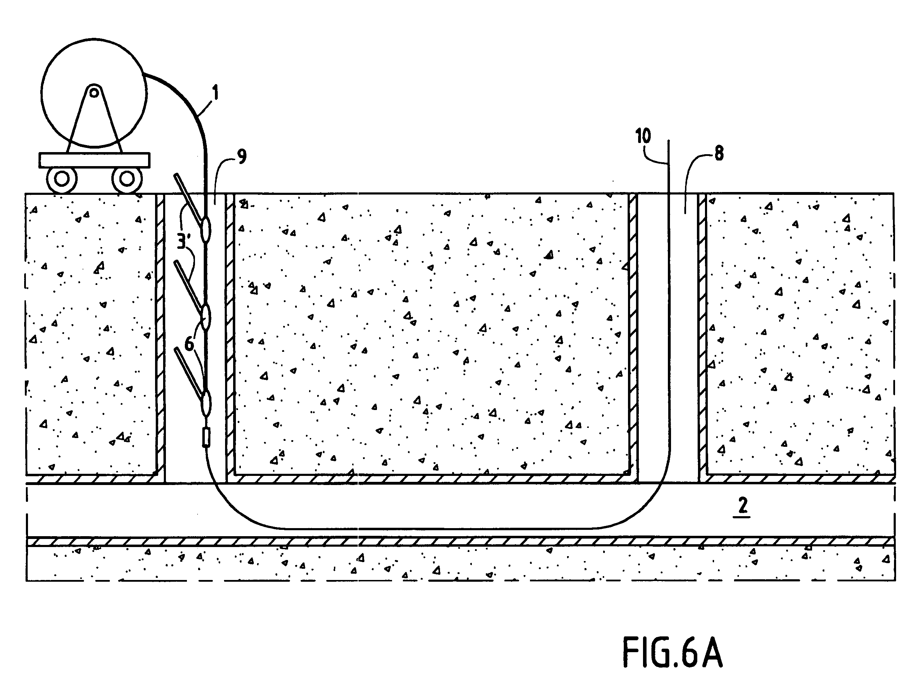

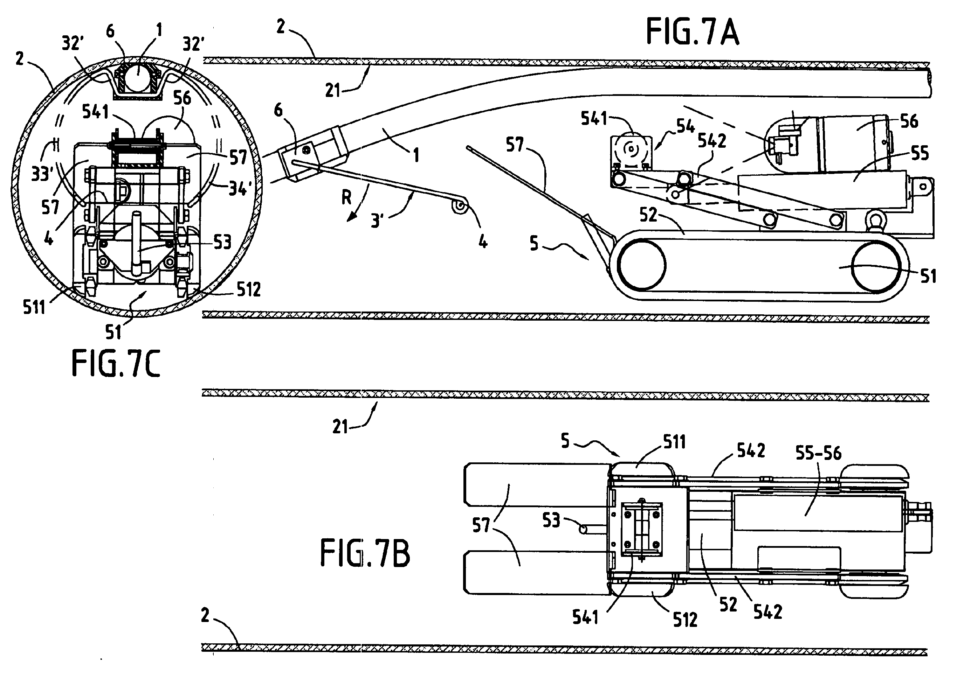

Les figures 6A à 6C et 7A à 7C illustrent plus en détail les modalités d'installation d'un câble 1 ou d'une gaine de fibres optiques conformément à cette seconde variante de réalisation du procédé de l'invention.

Les clips 3' sont fixés sur le câble 1 ou la gaine en dehors de la conduite 2 de façon à former une guirlande comme dans le mode de réalisation pour les clips 3.

Les clips 3' sont également bridés par un lien 4 de blocage reliant les extrémités libres des branches 33', 34' et les contraignant en flexion. Une fois ceci réalisé, Le câble 1 est tiré (figure 6A) depuis un regard de visite 8 en aval de la conduite 2 par l'intermédiaire d'un câble de traction 10, et il est simultanément poussé depuis un regard de visite 9 en amont. Un opérateur amont veille à la bonne introduction des clips 3' dans la conduite 2. L'introduction est facilitée par la liberté laissée aux clips qui ont tendance à pivoter autour de leur noix de fixation 6, de manière à offrir le minimum de résistance à la progression de l'ensemble dans le conduit. Les branches 33', 34' s'étendent alors dans un plan se rapprochant du plan contenant l'axe longitudinal du câble 1 et non dans un plan perpendiculaire au plan contenant l'axe du câble 1.

De préférence on choisi une distance nominale entre les clips 3' de l'ordre de 2m linéaire ; cette valeur est une variable d'ajustement du système pour d'adapter à des situations particulières, quelles résultent de la topologie du conduit (regards borgnes, branchements en piquage, joints de conduits) ou du poids de la gaine ou du câble 2 à soutenir.

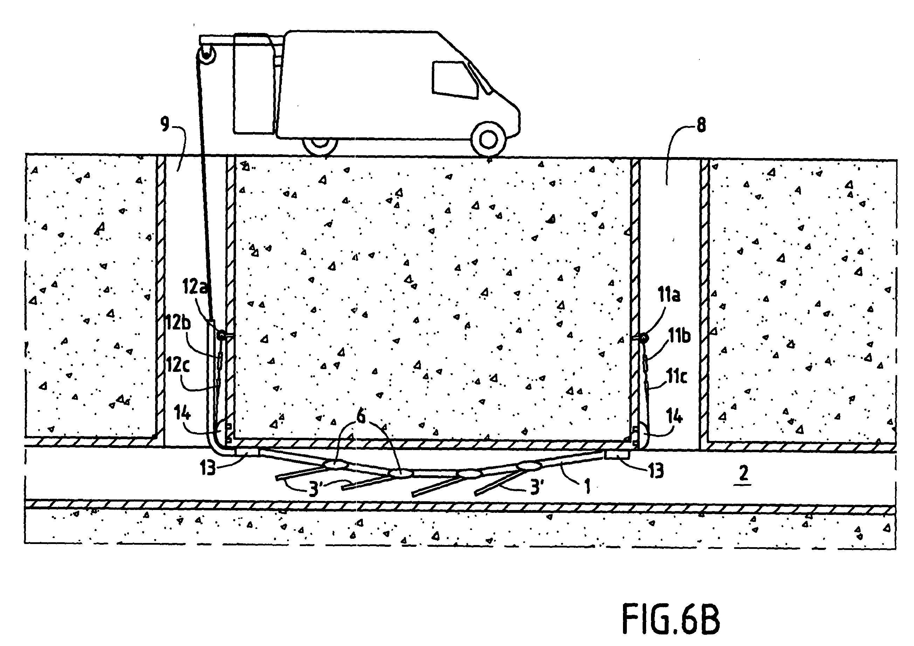

Une fois l'extrémité aval du câble 1 parvenue dans le regard aval 8, elle est ancrée (figure 6B) sur la paroi dudit regard 8 au moyen d'un dispositif d'ancrage comprenant un crochet 11a fixé dans ladite paroi du regard et un ridoir tenseur 11b reliant l'extrémité du câble 1 au crochet.

Un effort de traction est alors exercé sur le câble 1 pour le mettre en tension au moyen dudit ridoir tenseur, de câbles de tension et de pinces solidaires des extrémités du câble 1 en cours d'installation dans la conduite. Cette mise sous tension permet de prédisposer le câble 1 en partie haute de la conduite 2.

A chaque extrémité, le câble 1 est emprisonné dans une pince de serrage 13, dont les mâchoires agrippent ledit câble 1 sous l'action de câbles tenseurs 11c. La tension est exercée sur les câbles tenseurs 11c par le ridoir 11b disposé à la verticale dans le fût du regard de visite 8.

On fixe ensuite l'extrémité amont du câble 1 à l'aide d'un dispositif d'ancrage amont 12a, 12b, 12c, identique au dispositif d'ancrage aval, et qui est alors mis en oeuvre pour bloquer le câble 1 en position tendue entre les ancrages amont et aval.

Une pièce de renvoi d'angle 14 positionnée à l'angle de raccord entre les regards de visite amont et aval 9, 8 et la conduite d'installation 2, assure la gestion du rayon de courbure du câble 1 ainsi que le renvoi de l'effort de traction des ridoirs 11b, 12b vers les pinces de serrage 13.

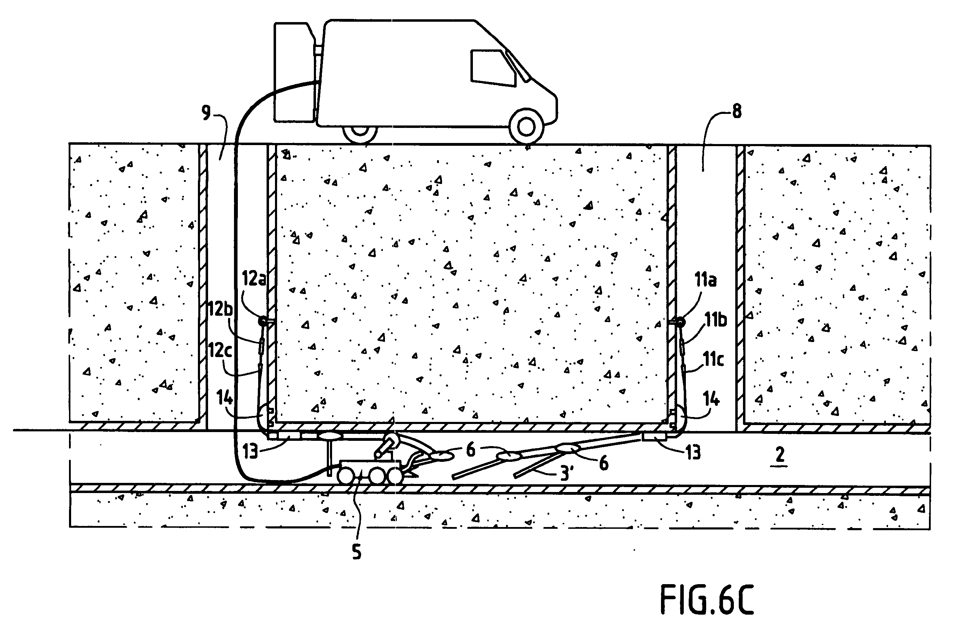

Comme représenté aux figures 6C à 7C, une fois le câble 1 introduit dans la canalisation 2 et en position pour sa fixation, on introduit dans ladite canalisation un dispositif robotisé 5 similaire à celui décrit aux figure 3A et 3B, et comportant en sus des spatules 57 fixés à l'avant du chariot 51 du dispositif 5, de part et d'autre du moyen de rupture 53 de celui-ci et formant des sortes de "cornes" largement proéminentes fixées à l'avant du chariot 51 du dispositif 5, sur le devant du dispositif.

Comme dans le premier mode de réalisation, le dispositif 5 avance ensuite dans la canalisation 2 en suivant le câble 1 par l'intermédiaire du pantographe 542 et du galet presseur 541 monté sur celui-ci. Lorsque le dispositif 5 s'approche des clips de soutiens 3', les cornes 57 entrent les premières en contact avec les branches 33', 34' ce qui provoque leur redressement dans le sens de la flèche R sur le figure 7A jusqu'à une position perpendiculaire à l'axe du câble 1 dans laquelle le clip 3' est bloqué par les ergots ou rainures de blocage 72.

Continuant à avancer dans la conduite 2, le dispositif 5 via son moyen de rupture 53 entre ensuite en contact, une fois le clip 3' redressé, avec le lien 4 reliant les branches de ce dernier et le rompt, par découpage ou fusion en fonction de la nature dudit moyen de rupture 53, qui pour rappel, comme dans le premier mode de réalisation, peut être tranchant sous la forme d'une lame ou chauffant sous la forme d'une résistance électrique.

Une fois le lien 4 rompu, les branches 33', 34' des clips 3' s'écartent par élasticité et viennent se plaquer contre la paroi de la conduite 2 à partir de laquelle une action verticale est exercée sur le câble 1 ou la gaine et vient plaquer celui ou celle-ci contre la génératrice supérieure de la conduite 2.

Une fois tous les clips 3' libérés par le dispositif 5, le câble 1 ou la gaine se trouve fixé dans la canalisation 2 comme dans le mode de réalisation décrit aux figures 3A et 3B.

Ainsi, quel que soit le type de clips de soutien 3, 3' utilisé, le procédé d'installation de câbles 1 selon la présente invention permet la pose de façon simple, rapide et sécurisée de câbles et gaines en canalisations non visitables. Les éléments de soutien 3, 3' posés permettent de réduire la flèche du câble 1 conformément, par exemple, à un cahier des charges. Dans le cas où le câble 1 est tendu entre deux points de la canalisation 2, il est envisageable de régler l'espacement des clips en fonction des valeurs de flèches acceptables en fonction du type de câble ou de gaine installé.

Dans une forme de mise en oeuvre particulière du procédé de l'invention, que ce soit dans la variante représentée aux figures 3A, 3B ou aux figures 47A à 7C, le dispositif robotisé 5 est doté d'une fonctionnalité d'orientation angulaire du câble 1 ou de la gaine pour permettre d'éviter des éventuels obstacles le long de la génératrice supérieure 21 de la conduite 2 dans laquelle le câble 1 est posé. Un exemple de tels obstacles est un branchement d'une conduite de raccordement d'immeuble qui pénètre en position zénithale dans le collecteur principal à l'intérieur duquel sont posés des câbles conformément au procédé de l'invention.

Il faut alors contourner ce point de raccordement, ce qui exige de pouvoir décaler les câbles sur les parois latérales du collecteur.

Dans ce cas, les moyens de positionnement et de soutien 541, 542 du câble ou de la gaine, les moyens de rupture 53, et le cas échéant les spatules d'orientation 57 des clips de soutien 3' du dispositif robotisé d'installation 5 sont dans leur ensemble, articulés autour d'un axe longitudinal, par rapport au chariot 51.

On peut notamment réaliser une telle articulation par un mécanisme de liaison "pendulaire" entre le chariot 51 et les moyens de rupture 53, les moyens de positionnement 541, 542 et les spatules 57. Dans un tel cas, lesdits moyens de rupture 53 et les éventuelles spatules 57 sont alors fixés préférentiellement sur la plateforme supérieure 52, qui est alors elle-même solidaire dudit chariot via l'axe longitudinal de pivotement de l'ensemble.

L'orientation de la plateforme 52 par rapport au chariot pour orienter les éléments actifs 53, 541, 542, 57 du dispositif 5 en regard des parois de la canalisation de pose 2 peut elle être réalisée par l'intermédiaire de divers systèmes d'entraînement bien connus de l'homme du métier dans le domaine de la mécanique, que ce soit notamment par moteur et courroies, engrenages ou encore vérins de poussée.

Cette fonctionnalité supplémentaire d'orientation des éléments actifs 53, 541, 542, 57 du dispositif 5 par rapport au chariot 51 de ce dernier permet avantageusement dans ce cas d'orienter en cours de pose, les câbles ou gaines 1 suivant une génératrice autre que la génératrice préférentielle de pose située au sommet de la voûte de la canalisation 2 dans laquelle les câbles sont installés.

## Revendications

1. Procédé d'installation d'un corps longiligne souple (1) apte à être bobiné, tel qu'un câble, une gaine, ou analogues, à l'intérieur d'une canalisation (2), notamment une canalisation non visitable, dans lequel on maintient ledit corps longiligne contre une paroi (21) de ladite canalisation à l'aide d'éléments de soutien ponctuels (3, 3') comportant des branches élastiques (31, 32, 31', 32') permettant l'introduction desdits éléments de soutien dans la canalisation lorsque lesdites branches sont contraintes et le placage desdites branches et dudit corps longiligne contre la paroi interne de la canalisation lorsque lesdites branches sont libérées, **caractérisé en ce que** successivement :
a) on fixe avant insertion dudit corps longiligne (1) dans ladite canalisation (2) une pluralité de dits éléments de soutien ponctuels (3, 3') le long dudit corps longiligne à installer dans ladite canalisation, de telle sorte que chaque élément de soutien ponctuel (3, 3') possède un degré de liberté en rotation autour dudit corps longiligne (1) mais soit bloqué en translation longitudinal sur ledit corps ;
b) on contraint en flexion lesdites branches desdits éléments de soutien ponctuels fixés sur ledit corps longiligne et on maintient lesdites branches (31, 32, 33', 34') sous contrainte par l'intermédiaire d'un élément de blocage (4) ;
c) on introduit ledit corps longiligne supportant lesdits éléments de soutien ponctuels dont les branches sont contraintes dans ladite canalisation entre au moins deux regards d'accès (8, 9) à ladite canalisation;
d) on plaque ledit corps longiligne contre la paroi (21) de ladite canalisation par retrait ou rupture dudit élément de blocage (4) contraignant lesdites branches de chaque dit élément de soutien ponctuel, lesdites branches, une fois libérées, réalisant un mouvement d'extension ou d'écartement latéral provoquant le plaquage dudit élément de soutien et dudit corps longiligne contre la paroi de la canalisation.

2. Procédé selon la revendication 1, dans lequel, à l'étape c), on tire ledit corps longiligne (1) depuis un dit premier regard d'accès (8) situé en aval de ladite canalisation (2) par l'intermédiaire d'un câble de traction (10) fixé à une extrémité dudit corps longiligne par l'intermédiaire d'une pince de serrage (13), et on pousse simultanément ledit corps longiligne au niveau d'un dit second regard d'accès (9) situé en amont.

3. Procédé selon la revendication 1 ou 2, dans lequel à l'étape c) on fixe les extrémités dudit corps longiligne (1) au niveau desdits regards d'accès (8, 9) au moyen d'un dispositif d'ancrage (11a, 11b, 11c; 12a, 12b, 12c) apte à exercer un effort tenseur sur ledit corps longiligne.

4. Procédé selon l'une des revendications 1 à 3, dans lequel on fixe lesdits éléments de soutien ponctuel (3, 3') sur ledit corps longiligne (1) par l'intermédiaire de noix de fixation (6).

5. Procédé selon l'une des revendications 1 à 4, dans lequel entre les étapes c) et d), on réalise un positionnement mécanique desdits éléments de soutien ponctuels (3, 3') à l'intérieur de la canalisation (2) par l'intermédiaire d'un dispositif robotisé (5) apte à être introduit dans ladite canalisation, ledit dispositif robotisé permettant le retrait ou la rupture des dédits éléments de blocage (4) des branches desdits éléments de soutien ponctuels à l'étape d).

6. Procédé selon la revendication 5, dans lequel ledit positionnement mécanique des éléments de soutien ponctuels à l'intérieur de la canalisation est tel que ledit corps longiligne (1) soit plaqué contre la paroi supérieure (21) de la canalisation après retrait desdits éléments de blocage (4) et plaquage desdits éléments de soutien (3, 3') contre les parois de la canalisation.

7. Procédé selon l'une des revendications 1 à 6, dans lequel, à l'étape d), on rompt lesdits éléments de blocage (4) par découpage.

8. Procédé selon l'une des revendications 1 à 6, dans lequel, à l'étape c), on rompt lesdites éléments de blocage par fusion.

9. Procédé selon l'une des revendications 1 à 8, dans lequel on rompt lesdits éléments de blocage par l'intermédiaire d'un dispositif robotisé (5) apte à être introduit dans ladite canalisation, ledit dispositif robotisé comportant des moyens de rupture (53) desdits éléments de blocage.

10. Procédé selon l'une des revendications 1 à 9, dans lequel pendant le déroulement de l'étape d) on positionne et on soutient ledit corps longiligne (1) contre la paroi supérieure (21) de ladite canalisation à l'aide d'un dispositif robotisé (5) apte à être introduit dans ladite canalisation.

11. Dispositif (5) de mise en oeuvre d'un procédé d'installation tel que défini dans l'une des revendications 1 à 10, comportant un chariot motorisé (51), équipé de moyens de roulement (511, 512) contre une paroi d'une canalisation (2) à l'intérieur de laquelle un dit corps longiligne souple (1) apte à être bobiné doit être
installé et une plate-forme (52) solidaire dudit chariot motorisé, **caractérisé en ce qu'**il comporte des moyens de rupture (53) desdits moyens de blocage (4) des branches (31, 32, 31', 32') desdits éléments de soutien ponctuels (3, 3') fixés sur ledit corps longiligne à installer dans ladite canalisation.

12. Dispositif selon la revendication 11, dans lequel lesdits moyens de rupture (53) sont solidaires de ladite plate-forme (52) et/ou dudit chariot (51) et sont proéminents par rapport audit chariot et ladite plate-forme.

13. Dispositif selon l'une des revendications 11 ou 12, dans lequel lesdits moyens de rupture (53) sont fixes ou mobiles par rapport audit chariot ou à ladite plate-forme.

14. Dispositif selon l'une des revendications 11 à 13, dans lequel lesdits moyens de rupture (53) comportent au moins un organe tranchant.

15. Dispositif selon l'une des revendications 11 à 14, dans lequel lesdits moyens de rupture (53) comportent au moins un organe chauffant.

16. Dispositif selon l'une des revendications 11 à 14, dans lequel lesdits moyens de rupture (53) sont aptes à être radio- ou télécommandés.

17. Dispositif selon l'une des revendications 11 à 16, comportant en outre des moyens de positionnement et de soutien (54) dudit corps longiligne (1) à être installé dans ladite canalisation (2), lesdits moyens de positionnement étant solidaires de ladite plate-forme (52).

18. Dispositif selon la revendication 17, dans lequel lesdits moyens de positionnement et de soutien (54) comportent un galet presseur (541) de forme adaptée au soutien et au glissement le long dudit corps longiligne (1), ledit galet presseur étant positionné à l'extrémité supérieure d'un mécanisme élévateur (542) solidaire de ladite plate-forme.

19. Dispositif selon la revendication 18, dans lequel ledit mécanisme élévateur (542) comporte un vérin d'actionnement (55), de préférence un vérin électrique.

20. Dispositif selon la revendication 19, dans lequel ledit mécanisme élévateur (542) comporte un bras monté pivotant sur la plate forme, ledit bras étant, le cas échéant, télescopique et actionné par ledit vérin.

21. Dispositif selon l'une des revendications 17 à 19, dans lequel ledit mécanisme élévateur comporte un pantographe (542), actionné par un vérin (55) ou un moteur.

22. Dispositif selon l'une des revendications 11 à 21, comportant également au moins une caméra (56) permettant une visualisation de l'intérieur de ladite conduite lors des déplacements dudit dispositif dans ladite conduite.

23. Dispositif selon l'une des revendications 18 à 22, dans lequel les moyens de positionnement et de soutien (541, 542) dudit corps longiligne, les moyens de rupture (53), et le cas échéant les spatules d'orientation (57) des clips de soutien (3') sont articulés autour d'un axe longitudinal, par rapport au chariot (51).

24. Dispositif selon la revendication 22 ou 23, dans lequel ladite caméra (56) est fixée sur ladite plate-forme (52), sur ledit chariot (51) ou à l'extrémité supérieure dudit mécanisme élévateur (54).

25. Dispositif selon l'une des revendications 11 à 24, comportant des spatules d'orientation (57) desdits éléments de soutien ponctuels (3, 3') fixés sur ledit corps longiligne (1) à installer dans ladite canalisation (2), lesdites spatules étant fixées sur ledit chariot (51) ou ladite plate-forme (52) de telle sorte qu'elles entrent en contact et appuient contre les branches (31, 32, 31', 32') desdits éléments de soutien ponctuels (3, 3') contraints par un dit élément de blocage (4) lorsque ledit dispositif avance dans ladite canalisation de manière à positionner lesdits éléments de blocage (4) des branches en regard desdits moyens de rupture (53) du dispositif et ledit corps longiligne (1) en regard de la paroi supérieure (21) de ladite canalisation, de telle sorte que lorsque ledit moyen de blocage est rompu ledit corps longiligne est plaqué contre cette dite paroi supérieure.

26. Dispositif selon l'une des revendications 11 à 25, dans lequel les moyens de positionnement et de soutien (541, 542) dudit corps longiligne (1), les moyens de rupture (53), et le cas échéant les spatules d'orientation (57) des clips de soutien (3, 3') sont dans leur ensemble, articulés autour d'un axe longitudinal, par rapport au chariot (51) de manière à pouvoir être orienté par rapport à la paroi de ladite canalisation (2).

## Claims

1. A method for the installation of a flexible elongate body (1) that is designed to be coiled-up, such as a cable, a duct, or the like, inside a pipe (2), in particular an inaccessible pipe, in which the said elongate body is held against a wall (21) of the said pipe by means of separate support elements (3, 3') with elastic branches (31, 32, 31', 32') allowing the insertion of the said support elements in the pipe when the said branches are constrained, and flattening of the said branches and of the said elongate body against the inner wall of the pipe when the said branches are released, **characterised in that**, in succession :
a) before insertion of the said elongate body (1) into the said pipe (2), a plurality of said separate support elements (3, 3') are fixed along the said elongate body to be installed in the said pipe, in such a manner that each separate support element (3, 3') has a degree of freedom to rotate around the said elongate body (1), but is fixed in longitudinal translation onto the said body;
b) the said branches of the said separate support elements attached to the said elongate body are constrained by bending, and the said branches (31, 32, 33', 34') are held under constraint by means of a retaining element (4) ;
c) the said elongate body supporting the said separate support elements whose branches are constrained in the said pipe between at least two access chambers (8, 9) is inserted into the said pipe ;
d) the said elongate body is flattened against the wall (21) of the said pipe by removal or breakage of the said retaining element (4) constraining the said branches of each said separate support element, with the said branches, once released, executing a movement of extension or lateral separation that results in flattening the said support element and the said elongate body against the wall of the pipe.

2. A method according to claim 1, in which, at step c), the said elongate body (1) is drawn from a said first access chamber (8) located downstream of the said pipe (2), by means of a drawing cable (10) that is attached to one end of the said elongate body by means of a retention clamp (13), and simultaneously the said elongate body is pushed at a said second access chamber (9) located upstream.

3. A method according to claim 1 or claim 2, in which, at step c), the ends of the said elongate body (1) are fixed at the said access chambers (8, 9) by means of an anchoring device (11a, 11b, 11c; 12a, 12b, 12c) that is designed to exert a tensioning force on the said elongate body.

4. A method according to any one of claims 1 to 3, in which the said separate support elements (3, 3') are fixed onto the said elongate body (1) by means of a securing yoke (6).

5. A method according to any one of claims 1 to 4, in which, between steps c) and d), a mechanical positioning of the said separate support elements (3, 3') is effected inside the pipe (2) by means of an automated device (5) that is designed to be inserted into the said pipe, with the said automated device being used for removal or breakage of the said retaining elements (4) of the branches of the said separate support elements at step d).

6. A method according to claim 5, in which the said mechanical positioning of the separate support elements inside the pipe is such that the said elongate body (1) is flattened against the top wall (21) of the pipe after removal of the said retaining elements (4) and flattening of the said support elements (3, 3') against the walls of the pipe.

7. A method according to any one of claims 1 to 6, in which, at step d), the said retaining elements (4) are broken by cutting.

8. A method according to any one of claims 1 to 6, in which, at step c), the said retaining elements are broken by melting.

9. A method according to any one of claims 1 to 8, in which the said retaining elements are broken by means of an automated device (5) that is designed to be inserted into the said pipe, where the said automated device has means (53) for breaking the said retaining elements.

10. A method according to any one of claims 1 to 9, in which, during the running of step d), the said elongate body (1) is positioned and supported against the top wall (21) of the said pipe, by means of an automated device (5) that is designed to be inserted into the said pipe.

11. A device (5) for implementing an installation method such as that described in any one of claims 1 to 10, that includes a motor-driven trolley (51), equipped with means for rolling (511, 512) along one wall of a pipe (2), inside which a said flexible elongate body (1), that is designed to be coiled-up, is to be installed, and a platform (52) attached to the said motor-driven trolley, **characterised in that** it includes means (53) for breakage of the said retention means (4) of the branches (31, 32, 31', 32') of the said separate support elements (3, 3') attached to the said elongate body to be installed in the said pipe.

12. A device according to claim 11, in which the said breakage means (53) are attached to the said platform (52) and/or to the said trolley (51), and are projecting in relation to the said trolley and to the said platform.

13. A device according to claim 11 or claim 12, in which the said breakage means (53) are fixed or mobile in relation to the said trolley or to the said platform.

14. A device according to any one of claims 11 to 13, in which the said breakage means (53) include at least one cutting device.

15. A device according to any one of claims 11 to 14, in which the said breakage means (53) include at least one heating device.

16. A device according to any one of claims 11 to 14, in which the said breakage means (53) are suitable to be radio-controlled or remotely-controlled.

17. A device according to any one of claims 11 to 16, which also includes means (54) for positioning and support of the said elongate body (1) to be installed in the said pipe (2), where the said positioning means are attached to the said platform (52).

18. A device according to claim 17, in which the said positioning and support means (54) include a pressure roller (541) with a shape that is designed to provide support and to slide along the said elongate body (1), with the said pressure roller being positioned at the top end of a lift mechanism (542) attached to the said platform.

19. A device according to claim 18, in which the said lift mechanism (542) includes an actuator (55), preferably an electrical actuator.

20. A device according to claim 19, in which the said lift mechanism (542) includes an arm that is mounted to pivot on the platform, the said arm being telescopic where appropriate, and operated by the said actuator.

21. A device according to any one of claims 17 to 19, in which the said lift mechanism includes a pantograph (542), operated by an actuator (55) or a motor.

22. A device according to any one of claims 11 to 21, which also includes at least one camera (56) to provide a view of the interior of the said pipe during movements of the said device in the said pipe.

23. A device according to any one of claims 18 to 22, in which the positioning and support means (541, 542) for the said elongate body, the breakage means (53), and the spatulas for orientation (57) of the support clips (3') where appropriate, are articulated around a longitudinal axis in relation to the trolley (51).

24. A device according to claim 22 or claim 23, in which the said camera (56) is fixed onto the said platform (52) on the said trolley (51), or to the top end of the said lift mechanism (54).

25. A device according to any one of claims 11 to 24, that includes spatulas (57) for orientation of the said separate support elements (3, 3') attached to the said elongate body (1) to be installed in the said pipe (2), with the said spatulas being fixed onto the said trolley (51) or the said platform (52) so that they come into contact and press against the branches (31, 32, 31', 32') of the said separate linking elements (3, 3') constrained by a said retaining element (4) when the said device advances in the said pipe so as to position the said retaining elements (4) of the branches opposite the said breakage means (53) of the device, and the said elongate body (1) against the top wall (21) of the said pipe, in such a manner that when the said retaining means are broken, the said elongate body is flattened against this said top wall.

26. A device according to any one of claims 11 to 25, in which the positioning and support means (541, 542) for the said elongate body (1), the breakage means (53), and the spatulas (57) for orientation of the support clips (3, 3') where appropriate, are articulated as a whole around a longitudinal axis in relation to the trolley (51), so as to be capable of being oriented in relation to the wall of the said pipe (2).

## Patentansprüche

1. Verfahren zur Installation eines langgestreckten, flexiblen, wickelfähigen Körpers (1), wie eines Kabels, einer Ummantelung oder ähnlichem, in einer Rohrleitung (2), insbesondere einer nicht begehbaren Rohrleitung, wobei der langgestreckte Körper an einer Wand (21) der Rohrleitung mit Hilfe punktueller Stützelemente (3, 3') gehalten wird, die elastische Schenkel (31, 32, 31', 32') umfassen, welche das Einführen der Stützelemente in die Rohrleitung ermöglichen, wenn die Schenkel gespannt sind, und das Andrücken der Schenkel und des langgestreckten Körpers an die Innenwand der Rohrleitung ermöglichen, wenn die Schenkel freigegeben sind, **dadurch gekennzeichnet, daß** nacheinander:
a) vor Einführen des langgestreckten Körpers (1) in die Rohrleitung (2) eine Vielzahl von punktuellen Stützelementen (3, 3') entlang des in der Rohrleitung zu installierenden langgestreckten Körpers derart befestigt werden, daß jedes punktuelle Stützelement (3, 3') einen Drehfreiheitsgrad um den langgestreckten Körper (1) hat, aber an dem Körper gegen eine Längsverschiebung festgelegt ist,
b) die Schenkel der an dem langgestreckten Körper befestigten punktuellen Stützelemente biegebelastet werden und die Schenkel (31, 32, 33', 34') mittels eines Blockierelements (4) unter Spannung gehalten werden,
c) der langgestreckte Körper, der die punktuellen Stützelemente trägt, deren Schenkel gespannt sind, in die Rohrleitung zwischen wenigstens zwei Zugangsschächten (8, 9) zu der Rohrleitung eingeführt wird,
d) der langgestreckte Körper durch Herausnehmen oder Aufbrechen des Blockierelements (4), das die Schenkel eines jeden punktuellen Stützelements spannt, gegen die Wand (21) der Rohrleitung gedrückt wird, wobei die Schenkel, sobald sie freigegeben sind, eine seitliche Dehn- oder Spreizbewegung ausführen, die bewirkt, daß das Stützelement und der langgestreckte Körper gegen die Wand der Rohrleitung gedrückt werden.

2. Verfahren nach Anspruch 1, wobei bei Schritt c) der langgestreckte Körper (1) von einem ersten Zugangsschacht (8) aus, der der Rohrleitung (2) nachgeordnet ist, mittels eines Zugseils (10), das durch eine Spannzange (13) an einem Ende des langgestreckten Körpers befestigt ist, gezogen wird und gleichzeitig der langgestreckte Körper im Bereich eines zweiten, vorgeordneten Zugangsschachtes (9) geschoben wird.

3. Verfahren nach Anspruch 1 oder 2, wobei bei Schritt c) die Enden des langgestreckten Körpers (1) im Bereich der Zugangsschächte (8, 9) mittels einer Verankerungsvorrichtung (11 a, 11 b, 11c; 12a, 12b, 12c), die geeignet ist, auf den langgestreckten Körper eine Spannkraft auszuüben, befestigt werden.

4. Verfahren nach einem der Ansprüche 1 bis 3, wobei die punktuellen Stützelemente (3, 3') mit Hilfe von Befestigungsanschlägen (6) an dem langgestreckten Körper (1) befestigt werden.

5. Verfahren nach einem der Ansprüche 1 bis 4, wobei zwischen den Schritten c) und d) ein mechanisches Positionieren der punktuellen Stützelemente (3, 3') innerhalb der Rohrleitung (2) mittels einer robotisierten Vorrichtung (5), die geeignet ist, in die Rohrleitung eingeführt zu werden, durchgeführt wird, wobei die robotisierte Vorrichtung das Herausnehmen oder Aufbrechen der Blockierelemente (4) der Schenkel der punktuellen Stützelemente bei Schritt d) ermöglicht.

6. Verfahren nach Anspruch 5, wobei das mechanische Positionieren der punktuellen Stützelemente innerhalb der Rohrleitung derart ist, daß der langgestreckte Körper (1) nach Herausnehmen der Blockierelemente (4) und Drücken der Stützelemente (3, 3') gegen die Wände der Rohrleitung gegen die obere Wand (21) der Rohrleitung gedrückt wird.

7. Verfahren nach einem der Ansprüche 1 bis 6, wobei bei Schritt d) die Blockierelemente (4) zerschnitten werden.

8. Verfahren nach einem der Ansprüche 1 bis 6, wobei bei Schritt c) die Blockierelemente aufgeschmolzen werden.

9. Verfahren nach einem der Ansprüche 1 bis 8, wobei die Blockierelemente mittels einer robotisierten Vorrichtung (5), die geeignet ist, in die Rohrleitung eingeführt zu werden, aufgebrochen werden, wobei die robotisierte Vorrichtung Mittel zum Aufbrechen (53) der Blockierelemente umfaßt.

10. Verfahren nach einem der Ansprüche 1 bis 9, wobei während des Ablaufs des Schrittes d) der langgestreckte Körper (1) mit Hilfe einer robotisierten Vorrichtung (5), die geeignet ist, in die Rohrleitung eingeführt zu werden, an der oberen Wand (21) der Rohrleitung positioniert und gestützt wird.

11. Vorrichtung (5) zur Durchführung eines Installationsverfahrens wie es in einem der Ansprüche 1 bis 10 definiert ist, umfassend einen motorisierten Schlitten (51), der mit Mitteln zum Fahren (511, 512) an einer Wand einer Rohrleitung (2), in der ein langgestreckter, flexibler, wickelfähiger Körper (1) installiert werden soll, ausgestattet ist, sowie eine Plattform (52), die mit dem motorisierten Schlitten fest verbunden ist, **dadurch gekennzeichnet, daß** sie Mittel zum Aufbrechen (53) der Blockiermittel (4) der Schenkel (31, 32, 31', 32') der an dem in der Rohrleitung zu installierenden langgestreckten Körper befestigten punktuellen Stützmittel (3, 3') umfaßt.

12. Vorrichtung nach Anspruch 11, wobei die Aufbrechmittel (53) mit der Plattform (52) und/oder dem Schlitten (51) fest verbunden sind und gegenüber dem Schlitten und der Plattform vorragen.

13. Vorrichtung nach einem der Ansprüche 11 oder 12, wobei die Aufbrechmittel (53) gegenüber dem Schlitten oder der Plattform fest oder beweglich sind.

14. Vorrichtung nach einem der Ansprüche 11 bis 13, wobei die Aufbrechmittel (53) wenigstens ein Schneideorgan umfassen.

15. Vorrichtung nach einem der Ansprüche 11 bis 14, wobei die Aufbrechmittel (53) wenigstens ein Heizorgan umfassen.

16. Vorrichtung nach einem der Ansprüche 11 bis 14, wobei die Aufbrechmittel (53) geeignet sind, funk- oder ferngesteuert zu werden.

17. Vorrichtung nach einem der Ansprüche 11 bis 16, ferner umfassend Mittel zum Positionieren und Stützen (54) des in der Rohrleitung (2) zu installierenden langgestreckten Körpers (1), wobei die Positionierungsmittel mit der Plattform (52) fest verbunden sind.

18. Vorrichtung nach Anspruch 17, wobei die Positionierungs- und Stützmittel (54) eine Druckrolle (541) mit einer zum Stützen und Gleiten entlang des langgestreckten Körpers (1) geeigneten Form umfassen, wobei die Druckrolle am oberen Ende eines mit der Plattform fest verbundenen Hubmechanismus (542) angeordnet ist.

19. Vorrichtung nach Anspruch 18, wobei der Hubmechanismus (542) einen Betätigungszylinder (55), vorzugsweise einen Elektrozylinder umfaßt.

20. Vorrichtung nach Anspruch 19, wobei der Hubmechanismus (542) einen Arm umfaßt, der an der Plattform schwenkbar angebracht ist, wobei der Arm gegebenenfalls teleskopartig ausgebildet ist und über den Zylinder betätigt wird.

21. Vorrichtung nach einem der Ansprüche 17 bis 19, wobei der Hubmechanismus einen Pantographen (542), der über einen Zylinder (55) oder einen Motor betätigt wird, umfaßt.

22. Vorrichtung nach einem der Ansprüche 11 bis 21, ebenfalls umfassend wenigstens eine Kamera (56) die eine visuelle Darstellung des Innenraums der Rohrleitung bei den Bewegungen der Vorrichtung in der Rohrleitung ermöglicht.

23. Vorrichtung nach einem der Ansprüche 18 bis 22, wobei die Mittel zum Positionieren und Stützen (541, 542) des langgestreckten Körpers, die Aufbrechmittel (53) und gegebenenfalls die Spatel zum Ausrichten (57) der Stützclips (3') um eine Längsachse gegenüber dem Schlitten (51) angelenkt sind.

24. Vorrichtung nach Anspruch 22 oder 23, wobei die Kamera (56) an der Plattform (52), an dem Schlitten (51) oder am oberen Ende des Hubmechanismus (54) befestigt ist.

25. Vorrichtung nach einem der Ansprüche 11 bis 24, umfassend Spatel zum Ausrichten (57) der punktuellen Stützelemente (3, 3'), die an dem in der Rohrleitung (2) zu installierenden langgestreckten Körper (1) befestigt sind, wobei die Spatel an dem Schlitten (51) oder der Plattform (52) derart befestigt sind, daß sie mit den Schenkeln (31, 32, 31 `, 32`) der durch ein Blockierelement (4) belasteten punktuellen Stützelemente (3, 3') in Kontakt gelangen und an diesen anliegen, wenn sich die Vorrichtung in der Rohrleitung vorwärtsbewegt, um die Blockierelemente (4) der Schenkel gegenüber den Aufbrechmitteln (53) der Vorrichtung und den langgestreckten Körper (1) gegenüber der oberen Wand (21) der Rohrleitung zu positionieren, derart daß dann, wenn das Blockiermittel aufgebrochen ist, der langgestreckte Körper gegen diese obere Wand gedrückt wird.

26. Vorrichtung nach einem der Ansprüche 11 bis 25, wobei die Mittel zum Positionieren und Stützen (541, 542) des langgestreckten Körpers (1), die Aufbrechmittel (53) und gegebenenfalls die Spatel zum Ausrichten (57) der Stützclips (3, 3') in ihrer Gesamtheit um eine Längsachse gegenüber dem Schlitten (51) angelenkt sind, um gegenüber der Wand der Rohrleitung (2) ausgerichtet werden zu können.
